# EUROPÄISCHE PATENTANMELDUNG

(11) **EP 3 236 435 A1**
(43) Veröffentlichungstag der Anmeldung: **25.10.2017**
(21) Anmeldenummer: 17165281.1
(22) Anmeldetag: 06.04.2017
(51) Int. Cl.: G07F 1/02, G07D 11/00, G07F 17/20, G06K 13/08

(54) **VERRIEGELBARE ENTGEGENNAHMEVORRICHTUNG FÜR ZAHLUNGSMITTEL EINER FAHRZEUGBEHANDLUNGSANLAGE**

(30) Priorität: 22.04.2016 DE 102016107520
(71) Anmelder: WashTec Holding GmbH, 86153 Augsburg (DE)
(72) Erfinder: KECHELE, Sven Christian, 86391 Stadtbergen (DE); TANTSOUKIS, Beniamin, 86438 Kissing (DE)
(74) Vertreter: Winter, Brandl, Fürniss, Hübner, Röss, Kaiser, Polte - Partnerschaft mbB

(57) **Zusammenfassung**

Offenbart ist eine Entgegennahmevorrichtung für Zahlungsmittel (6; 60) einer Fahrzeugbehandlungsanlage (2), welche einen Einführkanal (44; 94) für das Zahlungsmittel, insbesondere Münzen oder Wertkarten, und einen innerhalb des Einführkanals angeordneten, beweglichen Verschlusskörper aufweist, der in eine Sperrstellung bringbar ist, um den Einführkanal (44; 94) zu blockieren und sowohl für das Zahlungsmittel als auch für Spritzwasser den weiteren Weg ins Innere der Vorrichtung (6; 60) zu versperren, und in eine Freigabestellung bringbar ist, um den Einführkanal (44; 94) für das Zahlungsmittel freizugegeben. Erfindungsgemäß ist insbesondere an der tiefsten Stelle des Einführkanals (44; 94) eine Wasserabführung (38; 88) ausgebildet, über welche vor und hinter dem Verschlusskörper (20; 70) befindliches Wasser abgeführt werden kann. Ferner ist der Verschlusskörper (20; 70) rotierbar und darin ein Freigabeschlitz (48; 98) ausgebildet, der in der Freigabestellung mit dem Einführkanal (44; 94) fluchtet und in der Sperrstellung nicht.

## Beschreibung

Die Erfindung betrifft eine Entgegennahmevorrichtung für Zahlungsmittel (selbstkassierendes Gerät oder Benutzerterminal) einer Fahrzeugbehandlungsanlage mit einem beweglichen Verschluss zum wahlweisen Versperren oder Freigeben eines Einführkanals für das Zahlungsmittel (eines Münz- oder Kartenschlitzes).

In der Fahrzeugwaschtechnik können insbesondere bei Selbstbedienungs-(SB-)Anlagen oder Portalwaschanlagen Kunden über eine Bedieneinheit die jeweilige Anlage selbst bedienen. Mit Hilfe dieser Bedieneinheit können beispielsweise Waschprogramme (wie Intensiv-Vorreinigung, Shampoo, Wachs, Frischwasser und Osmosewasser über die Hochdrucklanze, Schaum über die Waschbürste) ausgewählt und über selbstkassierende oder münz- bzw. kartenbetätigte Geräte die Bezahlung (mittels Münzen, Jetons, Wertkarten, Transponderwaschkarten oder Codes) vorgenommen werden.

Dabei gibt es immer wieder Probleme mit Wasser, sei es durch Bewitterung, Strahlwasser an SB-Anlagen oder bei der Reinigung, das in bestehende Bedienterminals sowohl im SB-Bereich als auch bei Portalanlagen eindringt und dort zu Beschädigungen der Münzprüfer oder anderer Einbaugeräte führt.

Während bei solchen Bedieneinheiten Folientastaturen, Drucktasten oder ähnliche Bedienelemente spritzwasserdicht oder sogar wasserdicht ausgestaltet werden können, müssen an sich offene Eingabeschlitze, wie Münzeinwurf oder Bezahl- oder Transponderkarteneinzüge vor Wassereintritt geschützt werden. Bislang hat man dieses Problem mittels Schutzklappen gelöst, die aber zum einen schlecht zu bedienen sind, weil diese während des Münzeinwurfs bzw. Karteneinführens in der Regel mit der zweiten Hand nach oben gehalten werden müssen, und zum anderen oftmals beschädigt oder sogar abgerissen werden.

Vor diesem Hintergrund besteht die Aufgabe der vorliegenden Erfindung darin, eine Entgegennahmevorrichtung für Zahlungsmittel bereitzustellen, welches auf zuverlässige Weise einen Wassereintritt über den Einführkanal (Münz- oder Kartenschlitz) in das Innere der Vorrichtung verhindert.

Diese Aufgabe wird durch eine Entgegennahmevorrichtung für Zahlungsmittel mit den Merkmalen des Anspruchs 1 gelöst. Vorteilhafte Weiterbildungen sind jeweils Gegenstand von Unteransprüchen.

Eine erfindungsgemäße Entgegennahmevorrichtung für Zahlungsmittel (selbstkassierendes Gerät, Benutzerterminal oder Automat), insbesondere für eine Fahrzeugbehandlungsanlage, weist einen Einführkanal für das Zahlungsmittel, insbesondere Münzen oder Wertkarten, sowie einen innerhalb des Einführkanals angeordneten, beweglichen Verschlusskörper auf. Dabei ist der Verschlusskörper in eine Sperrstellung bringbar, um den Einführkanal zu blockieren und sowohl für das Zahlungsmittel als auch für Spritzwasser den weiteren Weg ins Innere der Vorrichtung zu versperren, und in eine Freigabestellung bringbar, um den Einführkanal für das Zahlungsmittel freizugegeben. Ferner ist eine Wasserabführung vorgesehen, über welche vor und hinter dem Verschlusskörper befindliches Wasser abgeführt werden kann.

Somit ist das erfindungsgemäße Gerät nicht nur in der Lage, den Eingabeschlitz für Münzen oder Karten zu versperren und bedarfsweise freizugeben, sondern auch auf sichere und zuverlässige Weise zu verhindern, dass (Spritz-)Wasser über den Münz-oder Kartenschlitz ins Geräteinnere gelangt, da der Verschluss den Einführkanal (spritzwasserdicht) versperren kann, so dass das ggf. über den Einführschlitz bzw. - spalt eingedrungene Wasser gar nicht bis ans Ende des Schlitzes bzw. Einführkanals an der Innenseite Einführkanals gelangt. Aufgrund des ebenfalls innerhalb des Einführkanals vorgesehenen Wasserablaufs kann eingedrungenes Wasser vor und hinter dem Verschlusskörper auf sichere Weise abgeführt werden, so dass sich kein Wasser innerhalb des Einführkanals ansammeln kann und deshalb bei einem anschließenden Betätigen des Verschlusskörpers in die Freigabestellung kein Wasser den Einführkanal passieren kann. Somit wird sichergestellt, dass das Wasser erst gar nicht in das Innere des Gerätegehäuses eindringen kann. Da der Verschluss im Einführkanal vorgesehen ist, kann dieser auch nicht durch unsachgemäße Handhabung oder äußere Einflüsse beschädigt werden, so dass der erfindungsgemäße Verschluss weniger fehleranfällig ist.

Gemäß einem Aspekt der Erfindung kann in den Einführkanal gelangtes und an dem Verschlusskörper abgewiesenes Wasser über die, insbesondere an der tiefsten Stelle des Einführkanals ausgebildeten, Wasserabführung abgeführt werden. Wenn die Wasserabführung an der tiefsten Stelle des Einführkanals vorgesehen ist, fließt eingedrungenes Wasser schwerkraftbedingt von alleine zur Wasserabführung und vollständig aus dem Einführkanal ab.

Gemäß einem Aspekt der Erfindung kann der Verschlusskörper, insbesondere um eine quer zum Einführkanal verlaufende Achse, rotierbar sein. Bei dem Verschlusskörper kann es sich um eine um die Achse rotierbare zylindrische Sperrwelle handeln.

Gemäß einem Aspekt der Erfindung kann in dem Verschlusskörper ein Freigabeschlitz ausgebildet sein, der in der Freigabestellung mit dem Einführkanal fluchtet und in der Sperrstellung nicht. Auf diese Weise lässt sich auf einfache Weise der Einführkanal versperren und freigeben.

Gemäß einem Aspekt der Erfindung kann der Verschlusskörper in einer quer zum Einführkanal verlaufenden und diesen schneidenden Aufnahme, insbesondere in einer zylindrischen Querbohrung, drehbar aufgenommen oder geführt sein.

Gemäß einem Aspekt der Erfindung kann der Verschluss einen im Wesentlichen dem Einführkanal (in Höhe und Breite) entsprechenden Freigabeschlitz aufweisen. Dabei können der Schlitzdurchgang und der Freigabeschlitz in dem Verschluss bzw. in der Sperrwelle derart relativ zueinander bewegt (verdreht) werden, dass sie in der Freigabestellung fluchten und in der Sperrstellung nicht. Mit anderen Worten entspricht der Schlitzquerschnitt des Schlitzdurchgangs dem Querschnitt des Freigabeschlitzes. Dadurch wird einerseits sichergestellt, dass die in den Münz- oder Kartenschlitz eingegebenen Münzen, Jetons, Wertkarten etc. in der Freigabestellung des Verschlusses diesen auch passieren können. Andererseits kann dadurch der Verschluss in seiner Baugröße und seinem Platzbedarf möglichst kompakt gehalten werden.

Gemäß einem Aspekt der Erfindung kann sich die tiefste Stelle des Einführkanals in der Aufnahme befinden und die Wasserabführung an der tiefsten Stelle der Aufnahme ausgebildet sein. Auf diese Weise kann sichergestellt werden, dass am Verschlusskörper ablaufendes Wasser aus der Aufnahme des Verschlusskörpers abgeführt wird.

Gemäß einem Aspekt der Erfindung kann der Verschlusskörper an seiner Außenfläche und/oder die Aufnahme an ihrer Innenfläche zumindest ein Dichtelement aufweisen. Dadurch kann auf sichere Weise verhindert werden, dass Wasser zwischen dem Kontaktspalt (Gleit- oder Führungsspalt) zwischen Verschlusskörper und Aufnahme in das Innere der Vorrichtung gelangt. Als Dichtelement kann eine elastische Dichtung (Elastomerdichtung) oder eine nichtelastische Dichtung (z.B. eine eng tolerierte Gleitbuchse) auf dem Verschlusskörper bzw. Sperrwelle (entlang der Längsachse) oder in der Aufnahme vorgesehen sein.

Gemäß einem Aspekt der Erfindung kann der Verschlusskörper über ein angetriebenes Stellglied zwischen der Sperrstellung und der Freigabestellung gebracht werden, wobei der Antrieb des Stellglieds durch eine Steuerungsvorrichtung gesteuert werden kann. Der Antrieb kann durch einen Getriebemotor oder einen Linearmagnet bewerkstelligt werden. Auf diese Weise lässt sich eine präzise Ansteuerung des Verschlusses erreichen.

Gemäß einem Aspekt der Erfindung kann der Einführkanal ein zum Schlitzeingang hin weisendes Gefälle oder eine Ablaufschräge oder -rinne aufweisen. Dadurch wird zusätzlich zu dem im Kartenschlitz vorhandenen Ablauf sichergestellt, dass sich nicht allzu viel Wasser und Feuchtigkeit im Schlitz sammelt, sondern nach außen abläuft. So kann verhindert werden, dass beim Einwerfen einer Münze oder Einschieben einer Karte zu einem späteren Zeitpunkt Feuchtigkeit in das Gerät eindringen kann.

Gemäß einem Aspekt der Erfindung kann der Verschluss über ein von einem Antrieb angetriebenes Stellglied zwischen der Sperrstellung und der Freigabestellung gebracht werden. Der Antrieb kann durch eine Steuerungsvorrichtung entsprechend gesteuert sein. Bei dem Antrieb kann es sich um einen Getriebemotor oder um einen Linearmagneten handeln. Die Betätigung des Verschlusses über einen gesteuerten Antrieb stellt zum einen sicher, dass der Verschluss wenn nötig auch verschlossen ist, während dies bei manuell betätigbaren Verschlüssen oder Schutzklappen vergessen werden kann und aufgrund dessen die Schutzklappe ihrer eigentlichen Funktion nicht mehr gerecht wird. Bei Schutzklappen, welche schwerkraftbedingt von selbst schließen, kann es sein, dass diese den Schlitz nicht ausreichend dicht abschließen. Darüber hinaus vereinfacht sich die Bedienung des Münzeinwurfs bzw. Karteneinzugs, da der Verschluss nicht manuell geöffnet bzw. offen gehalten werden muss.

Gemäß einem Aspekt kann im Kraftfluss zwischen dem Getriebemotor und dem Verschluss eine Rutschkupplung zwischengeschaltet sein. Dies hat den Vorteil, dass der Antrieb nicht beschädigt wird, wenn der Verschluss während der Betätigung durch den Benutzer, sei es absichtlich oder nicht, blockiert wird. Bei der Verwendung einer Rutschkupplung vereinfacht sich auch die Steuerung der Schließ- und Öffnungsbewegung des Verschlusses, da die jeweiligen Endpositionen nicht durch Sensoren detektiert werden müssen und somit diese Detektoren entfallen können. Die Steuerung der Schließ- und Öffnungsbewegung des Verschlusses kann durch eine Zeitsteuerung erfolgen, ohne dabei Gefahr zu laufen, dass der Motor beschädigt wird. Die Endposition kann aber auch anhand eines erhöhten Drehwiderstands am Motor erkannt werden.

Gemäß einem Aspekt der Erfindung kann bei Verwendung eines Linearmagneten bzw. eines translatorischen Antriebs und dem rotatorischen Verschluss ein Bewegungswandler zwischengeschaltet werden, welcher die lineare Antriebsbewegung in eine Drehbewegung des Verschlusses bzw. des Stellglieds umwandelt.

Gemäß einem Aspekt kann der Verschluss in die Sperrstellung gebracht werden, nachdem eine Wertkarte eingezogen worden ist oder wenn nach dem vollständigen Einzug einer Wertkarte mittels einer Kartenauslesevorrichtung festgestellt worden ist, dass die Wertkarte zur einmaligen Verwendung bestimmt ist. Bei Portalwaschanlagen werden beispielsweise oftmals einmal zu verwendende Wert- oder Transponderkarten verwendet, nach deren Einzug die Karte ausgelesen wird, das entsprechende Waschprogramm ausgewählt und aktiviert wird und die Karte in dem Gerät verbleibt. Durch das Verschließen des Karteneinzugs kann verhindert werden, dass der Benutzer die Wertkarte wieder aus dem Einzug zieht, so dass jeglichen Manipulationen vorgebeugt werden kann.

Gemäß einem Aspekt der Erfindung kann der Verschluss entsprechend einer Auswahl einer Zahlungsart betätigt werden und erst in die Freigabestellung gebracht werden, wenn im Bedienmenü des Geräts die entsprechende Zahlungsart, d.h. Münzzahlung oder Kartenzahlung, ausgewählt worden ist.

Nachstehend werden anhand schematischer Zeichnungen bevorzugte Ausführungsbeispiele beschrieben.

Es zeigen:
Figur 1 eine perspektivische Ansicht einer Selbstbedienungswaschanlage;
Figur 2 eine Bedieneinheit gemäß dem Stand der Technik;
Figur 3 eine perspektivische Ansicht einer Entgegennahmevorrichtung für Münzen gemäß einer ersten Ausführungsform der Erfindung;
Figur 4 eine perspektivische Ansicht einer Entgegennahmevorrichtung gemäß der ersten Ausführungsform der Erfindung;
Figur 5 eine perspektivische Rückansicht der Entgegennahmevorrichtung gemäß der ersten Ausführungsform der Erfindung;
Figur 6 eine perspektivische Ansicht einer Grundplatte der Entgegennahmevorrichtung gemäß der ersten Ausführungsform der Erfindung;
Figur 7 eine perspektivische Draufsicht der Entgegennahmevorrichtung gemäß der ersten Ausführungsform der Erfindung ohne Grundplatte;
Figur 8 eine perspektivische Ansicht einer Entgegennahmevorrichtung für Wertkarten gemäß einer zweiten Ausführungsform der Erfindung;
Figur 9 eine perspektivische Ansicht einer Entgegennahmevorrichtung gemäß der zweiten Ausführungsform der Erfindung;
Figur 10 eine perspektivische Rückansicht der Entgegennahmevorrichtung gemäß der zweiten Ausführungsform der Erfindung;
Figur 11 eine perspektivische Ansicht eines Grundkörpers der Entgegennahmevorrichtung gemäß der zweiten Ausführungsform der Erfindung;
Figur 12 eine weitere perspektivische Ansicht des Grundkörpers der Entgegennahmevorrichtung gemäß der zweiten Ausführungsform der Erfindung; und
Figur 13 eine perspektivische Draufsicht der Entgegennahmevorrichtung gemäß der zweiten Ausführungsform der Erfindung ohne Grundkörper.

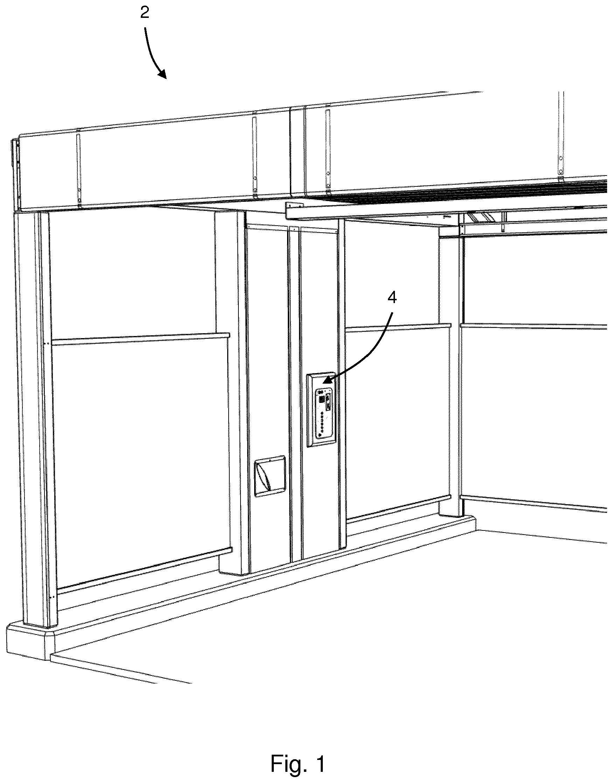

Die Fig. 1 zeigt eine perspektivische Teilansicht einer Fahrzeugbehandlungsanlage, genauer gesagt einer Selbstbedienungs-(SB-)Waschanlage 2. Dabei kann es sich auch um eine andere selbstkassierende Anlage wie eine Portalwaschanlage handeln. In einem nicht gezeigten Technikraum sind alle Komponenten für den Betrieb der Anlage 2, wie z. B. Hochdruckpumpen, Wasseraufbereitung einschl. Heizung, Reinigungschemie etc. untergebracht. In der Anlage 2 sind diverse, ebenfalls nicht dargestellte Behandlungsvorrichtungen wie eine Hochdrucklanze, eine Schaumlanze und/oder eine Waschbürste vorgesehen, welche jeweils über entsprechende Schläuche und Leitungen vom Technikraum aus mit entsprechenden Behandlungsmitteln versorgt werden.

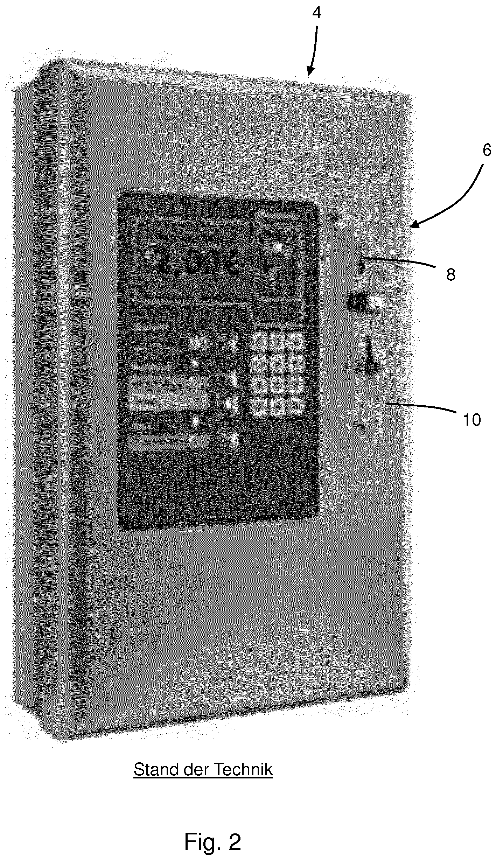

Eine in der Anlage 2 vorgesehene Bedieneinheit 4, welche in der Fig. 2 vergrößert dargestellt ist, dient zur Auswahl eines Waschprogramms bzw. zur Steuerung der Fahrzeugbehandlungsanlage 2 und der Behandlungsvorrichtungen und weist ferner eine Münzentgegennahmevorrichtung 6 (selbstkassierendes Gerät) auf, um vor Ort an der Anlage 2 einen Zahlungsvorgang vornehmen zu können. Wie aus der Fig. 2 erkennbar ist, weist die Bedieneinheit 4 neben einer Restgeldanzeige, einer numerischen Tastatur zum Eingeben von Nummerncodes oder zum Bestätigen der Eingabe, ein Transponderfeld zum Bezahlen mittels einer Transponderwaschkarte und einer Waschprogrammanzeige bzw. -anleitung auch einen Münzeinwurf 8 auf, welcher über eine transparente und aus Kunststoff oder Edelstahl hergestellte Schutzklappe 10 vor Spritzwasser geschützt wird. Die Schutzklappe 10 stellt eine aus dem Stand der Technik bekannte Lösung dar, um einen Wassereintritt in Vorrichtung 6 über den Münzeinwurf 8 zu unterbinden. Da eine solche Schutzklappe 10, wie eingangs beschrieben, in ihrer Bedienung umständlich ist und im Übrigen auch sehr leicht beschädigt wird, wird mit Bezug auf die folgenden Figuren die erfindungsgemäße Lösung beschrieben.

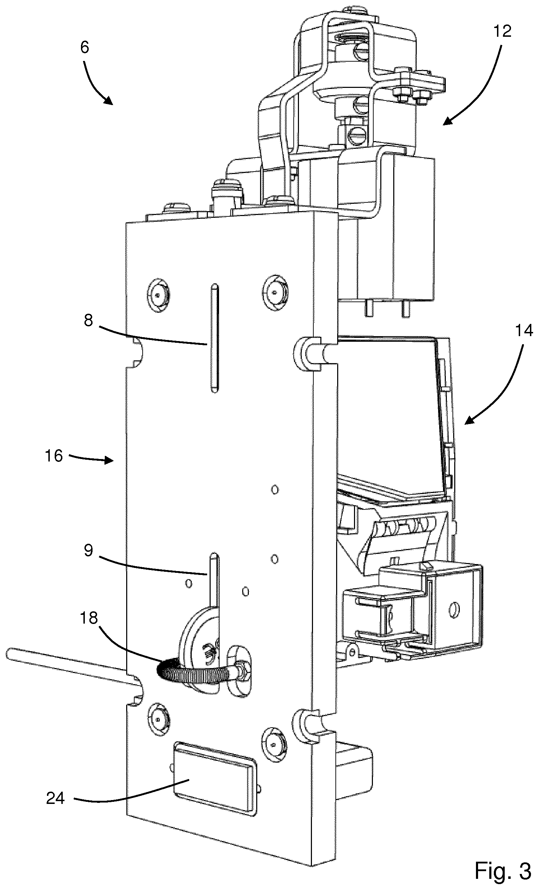

Die Fig. 3 zeigt eine perspektivische Ansicht eine Münzentgegennahmevorrichtung 6 mit einer Münzeinwurfverriegelungsvorrichtung (Verschluss) 12 und einem Münzprüfer 14. Die Münzeinwurfverriegelungsvorrichtung 12 weist eine Grundplatte (Trägerplatte) 16 auf, in welcher ein vertikal ausgerichteter Münzeinwurfschlitz 8 und ein vertikal etwas unterhalb des Münzeinwurfschlitzes 8 angeordneter und ebenfalls vertikal ausgerichteter Münzauslassschlitz 9 ausgebildet ist. Eine über den Münzeinwurfschlitz 8 eingeworfene Münze gelangt in den unmittelbar hinter der Grundplatte 16 angeordneten Münzprüfer 14, wird darin geprüft, ggf. über den Münzausgabeschlitz 9 wieder ausgegeben und wie in der Fig. 3 gezeigt durch einen vor dem Münzausgabeschlitz 9 vorgesehenen Fangbügel 18 aufgefangen, so dass die Münze nicht heraus und auf den Boden fällt.

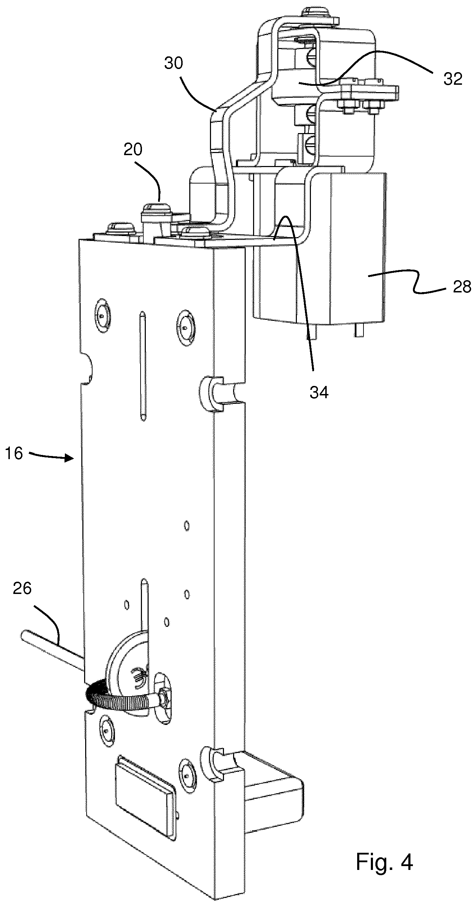

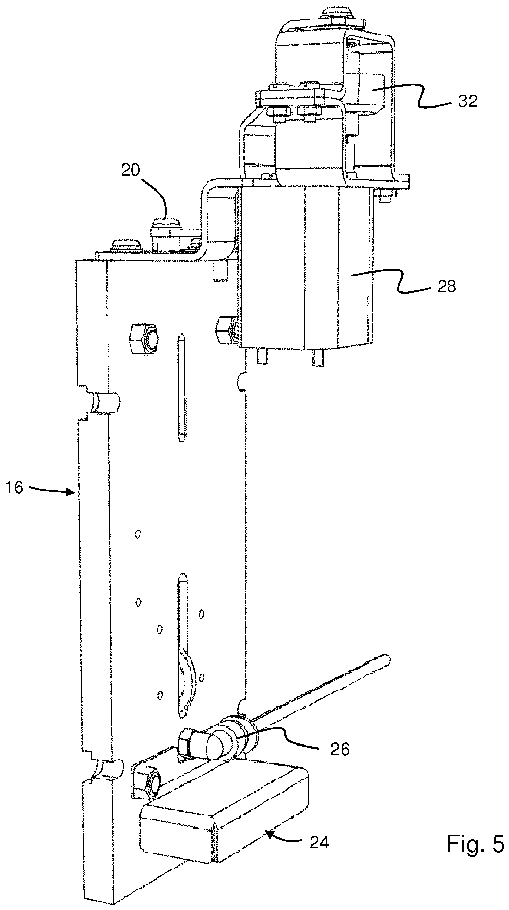

In der Fig. 4 ist die Münzeinwurfverriegelungsvorrichtung 12 isoliert, d.h. ohne Münzprüfer 14, dargestellt. Die Münzeinwurfverriegelungsvorrichtung 12 weist neben der Grundplatte 16, über welche die Münzeinwurfverriegelungsvorrichtung 12 an der Vorrichtung 6 oder Benutzerterminal montiert wird, eine in der Grundplatte 16 aufgenommene und darin drehbar geführte Sperrwelle (Verschlusskörper) 20, eine an der Grundplatte 16 befestigte Antriebseinheit 22, über welche die Sperrwelle 20 betätigbar ist, einen vertikal unterhalb des Münzausgabeschlitzes 9 in der Grundplatte 16 aufgenommenen und die Grundplatte 16 durchgreifenden Annäherungssensor 24 sowie einen - aus der perspektivischen Rückansicht der Fig. 5 besser erkennbaren - Ablauf 26 zum Abführen von über den Münzeinwurfschlitz 8 oder Münzausgabeschlitz 9 in das Innere der Grundplatte 16 eingetretenem Wasser oder Flüssigkeit auf. Der Ablauf 26 führt das Wasser hinter der Grundplatte 16 über eine Leitung oder einen Schlauch zur Seite der Vorrichtung 6 ab.

Die Antriebseinheit 22 weist einen elektrisch betriebenen Getriebemotor 28 und eine mit der Sperrwelle 20 wirkverbundene bzw. gekoppelte Stellmimik 30 auf, wobei zwischen dem Ausgang des Getriebemotors 28 und dem Eingang der Stellmimik 30 eine Rutschkupplung 32 zwischengeschaltet ist, welche ab einem vorbestimmten Drehmoment ein Drehmomentübertragung von dem Getriebemotor 28 auf die Stellmimik 30 bzw. umgekehrt unterbindet. Die Drehachse des Getriebemotors 28 und der Stellmimik 30 verläuft parallel zur Drehachse der Sperrwelle 20. Der Getriebemotor 28 und die Stellmimik 30 sind über eine Halterung 34 zu beiden Seiten der Sperrwelle 20 mit der kurzen Stirnkante der Grundplatte 16 verschraubt.

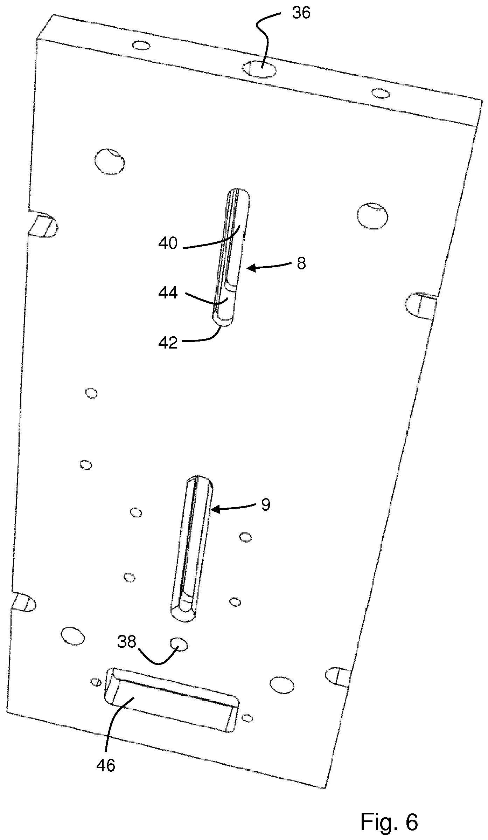

In der Fig. 6 ist eine perspektivische Rückansicht (Innenansicht) der Grundplatte 16 alleine gezeigt. Die Grundplatte 16 ist im Wesentlichen rechteckförmig und weist neben dem bereits oben beschriebenen und sich durch die Grundplatte 16 hindurch erstreckenden Münzeinwurfschlitz 8 und Münzausgabeschlitz 9 eine mittig oder zentral angeordnete und sich in vertikaler bzw. in Längsrichtung der Grundplatte 16 erstreckende Sacklochbohrung 36 auf, welche zur Aufnahme und Führung der Sperrwelle 20 dient und welche den Münzeinwurfschlitz 8 und den Münzausgabeschlitz 9 schneidet und unterhalb des Münzausgabeschlitzes 9 endet. Vom unteren Ende der Sacklochbohrung 36 führt eine Ablaufbohrung (Wasserabführung) 38 zur Rückseite, an welcher der Ablauf 26 befestigt wird, um die in die Sacklochbohrung 36 eingetretene Flüssigkeit abzuführen.

Der Münzeinwurfschlitz 8 und der Münzausgabeschlitz 9 weisen jeweils einen Schlitzeingang 40 an der Vorder- bzw. Außenseite und einen Schlitzausgang 42 an der Innen- bzw. hinteren Seite der Grundplatte 16 sowie einen dazwischenliegenden Einführkanal 44 auf. Die Sacklochbohrung 36 schneidet jeweils den Einführkanal 44 des Münzeinwurfschlitzes 8 und des Münzausgabeschlitzes 9.

Unterhalb der Sacklockbohrung 36 befindet sich eine im Wesentlichen rechteckförmige Aufnahme 46 für den Annäherungssensor 24.

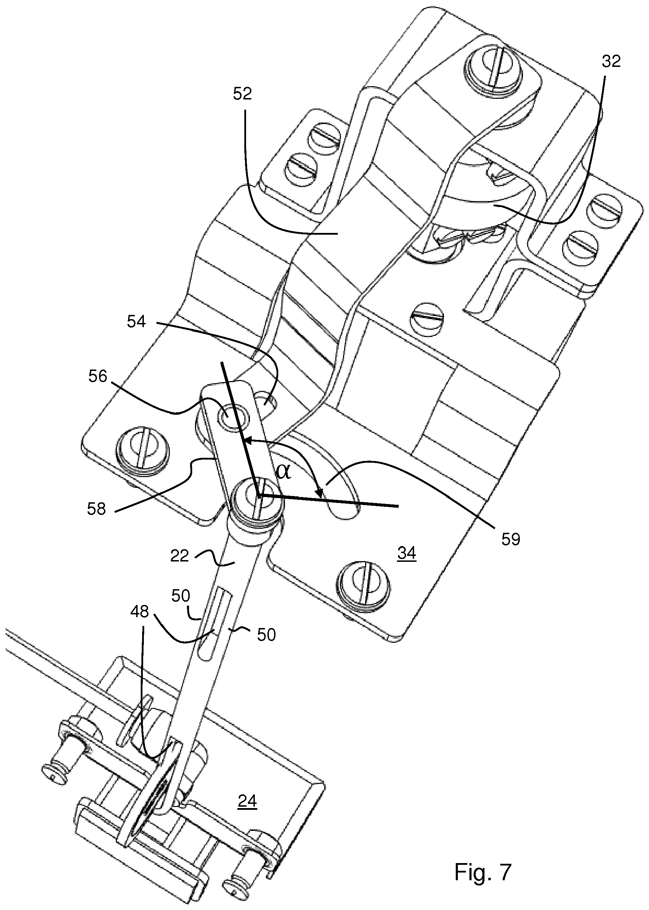

Die Fig. 7 zeigt eine perspektivische Draufsicht auf die Münzeinwurfverriegelungsvorrichtung 12, jedoch ohne die Grundplatte 16. Wie aus der Fig. 7 erkennbar ist, weist die Sperrwelle 20 zwei Freigabeschlitze 48 auf, die in ihren Abmessungen im Wesentlichen dem Münzeinwurfschlitz 8 bzw. Münzausgabeschlitz 9 entsprechen und auch an entsprechenden Positionen in Längsrichtung bzw. vertikaler Richtung der Sperrwelle 20 vorgesehen sind. Die Sperrwelle 20 ist drehbar in der Sacklochbohrung 36 in der Grundplatte 16 aufgenommen, wobei in der in der Fig. 7 dargestellten Position der Sperrwelle der Schlitzeingang 40, der Einführkanal 44, der Freigabeschlitz 48 und der Schlitzausgang 42 fluchten, so dass eine über den Schlitzeingang 40 eingeworfene Münze den in der Grundplatte 16 ausgebildeten Einführkanal 44 und in der Sperrwelle 20 ausgebildeten Freigabeschlitz 48 passieren und somit zum dahinter angeordneten Münzprüfer 14 gelangen kann.

Wie aus der Fig. 7 ferner erkennbar ist, ist die Sperrwelle 20 um einen Winkel α von vorzugsweise 90° um eine vertikale Achse bzw. Längsachse der Sacklochbohrung 36 (Längsachse der Sperrwelle 20) drehbar, so dass, wenn die Sperrwelle 20 in einer um den Winkel α gedrehten Position quer zum Einführkanal 44 ausgerichtet ist, Zylinderaußenflächen 50 zu beiden Seiten der Freigabeschlitze 48 jeweils den Einführkanal 44 zwischen Schlitzeingang 40 und Schlitzausgang 42 verschließen bzw. blockieren. Wenn also die Sperrwelle 20 um den Winkel α gedreht ist, verhindern die Zylinderaußenflächen 50 einen Münzeinwurf bzw. eine Münzausgabe und darüber hinaus einen Spritzwassereintritt ins Innere des Geräts 6, da das Spritzwasser von der Sperrwelle 20 bzw. den Zylinderaußenflächen 50 abgewiesen wird und entweder über den Einführkanal 44 zurück zum Schlitzeingang 40 nach außen läuft oder über den Kontakt bzw. Führungsspalt zwischen Sperrwelle 20 und Sacklochbohrung 36 schwerkraftbedingt nach unten läuft und über die Ablaufbohrung 38 und den daran angeschlossenen Ablauf 26 abgeführt werden kann, ohne dass dabei das Wasser in das Innere der Vorrichtung 6 dringt.

Im Folgenden wird die Drehbetätigung der Sperrwelle 20 beschrieben. Die Stellmimik 30 zwischen Rutschkupplung 32 und Sperrwelle 20 weist ein mit dem Ausgang der Rutschkupplung 32 drehfest verbundenes gestuftes Winkelprofil 52 auf, an dessen freien Ende ein Langloch 54 ausgebildet ist, in dem ein Führungsstift 56 aufgenommen ist, welcher parallel zur Sperrwelle 20 verläuft und über eine Verbindungsplatte 58 drehfest mit einem (dem oberen) Ende der Sperrwelle verbunden ist. Der Führungsstift 56 durchgreift nicht nur das Langloch 54 des Winkelprofils 52, sondern auch eine bogenförmig in der Halterung 34 ausgebildete Kulisse 59, wobei das Zusammenspiel von Führungsstift 56 und der bogenförmigen Kulisse 59 den maximalen Drehwinkel α der Sperrwelle 20 definieren. Durch Drehen des Winkelprofils 52 um eine zur Sperrwelle ebenfalls parallele Achse führt zu einer Drehbewegung des Führungsstifts 56 in der Kulisse 59 und damit zu einer Drehbewegung der Sperrwelle 20. Wenn der Führungsstift 56 an dem einen bzw. anderen Ende der Kulisse 59 anschlägt, wird die Drehbewegung des Winkelprofils 52 ebenfalls blockiert, weshalb die Rutschkupplung 32 durchrutscht und über eine Zeitschaltung nach einer vorbestimmten Zeit, z.B. 1 Sekunde, der Antriebsmotor 28 gestoppt werden kann. Alternativ kann auch die Stromaufnahme gemessen werden und bei Erreichen eines Grenzdrehmoments der Antriebsmotor 28 gestoppt werden.

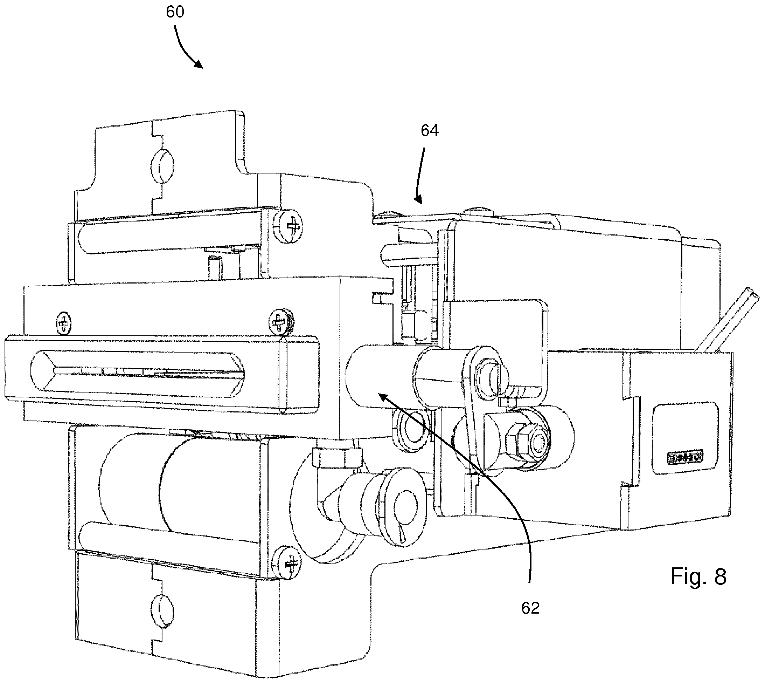

Die Fig. 8 zeigt eine zweite Ausführungsform eines erfindungsgemäßen Geräts am Beispiel eines Kartenlesegeräts bzw. einer Entgegennahmevorrichtung 60 für Wertkarten. Die Fig. 8 zeigt eine perspektivische Ansicht der Entgegennahmevorrichtung 60, welches eine Karteneinzugsverriegelungsvorrichtung (Verschluss) 62 und einen Transponderkartenleser 64 aufweist. Der Transponderkartenleser 64 weist eine nicht näher beschriebene Karteneinzugsmimik sowie Elektronikbauteile (RFID, Mifare) zum Auslesen der eingezogenen Transponderkarte und zum Entwerten der Transponderkarte auf. Bei einer mehrfach verwendeten Transponderkarte (Wertkarte (Geldbetrag), Multikarte (mehrere Wäschen)) wird diese wieder über den Einzug ausgegeben.

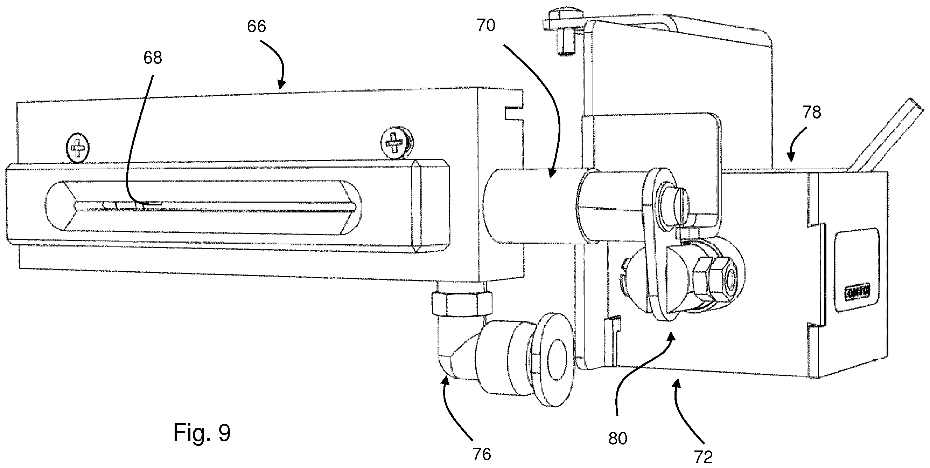

Die Fig. 9 zeigt eine perspektivische Ansicht der Karteneinzugsverriegelungsvorrichtung alleine, d.h. ohne Transponderkartenleser 64. Die Karteneinzugsverriegelungsvorrichtung 62 weist einen Grundkörper (Trägerplatte) 66 mit einem Karteneinzugsschlitz 68, eine in dem Grundkörper 66 aufgenommene und drehbar geführte Sperrwelle (Verschlusskörper) 70, eine Antriebseinheit 72 zum Betätigen der Sperrwelle 70, einen nicht näher dargestellten Annäherungssensor sowie einen Ablauf 76 auf, welcher mit dem Grundkörper 66 verbunden ist, um in den Grundkörper 66 eingetretenes Wasser oder andere Flüssigkeit abführen zu können.

Die Antriebseinheit 72 weist einen Linearmagneten 78, eine Stellmimik bzw. einen Bewegungswandler 80 auf, welche(r) eine translatorische Bewegung des Linearmagneten 78 in eine Drehbewegung der Sperrwelle 70 umwandelt. Die Stellmimik 80 ist mit dem Ausgang des Linearmagneten 78 und mit einem Ende der Sperrwelle 70 wirkverbunden. Die Antriebseinheit 72 ist über eine Halterung 84 an einem Außengehäuse des Transponderkartenlesers 65 (mit Schrauben) befestigbar. Der Grundkörper 66 ist ebenfalls (über Schrauben) an einer Front des Transponderkartenlesers 64 befestigbar. Somit kann die Karteneinzugsverriegelungsvorrichtung 62 nachträglich an einem herkömmlichen Transponderkartenleser 64 befestigt werden.

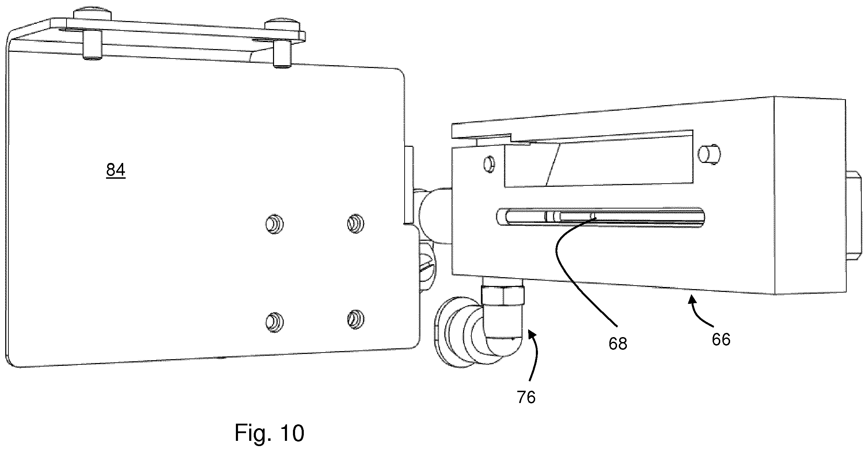

In der Fig. 10 ist eine perspektivische Rückansicht der Karteneinzugsverriegelungsvorrichtung 62 gezeigt, wobei zu erkennen ist, dass sich der Karteneingabeschlitz 68 durch den gesamten Grundkörper 66 erstreckt.

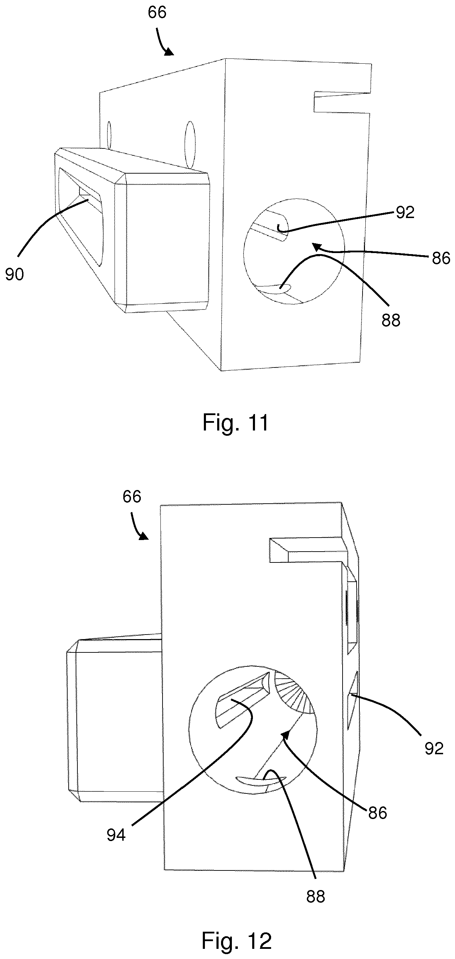

Die Fign. 11 und 12 zeigen zwei perspektivische Ansichten des Grundkörpers 66. Darauf ist zu erkennen, dass eine Sacklochbohrung 86 quer zur Karteneinzugseinrichtung in dem (einstückigen) Grundkörper 66 ausgebildet ist, welcher zur Aufnahme und Drehführung der Sperrwelle 70 dient. Die Sacklochbohrung 86 schneidet einen Einführkanal 94 zwischen einem außenseitigen (dem Benutzer zugewandten) Schlitzeingang 90 und einem innenseitigen (dem Transponderlesegerät 64 zugewandten) Schlitzausgang 92. Ferner führt von der zylindrischen Sacklochbohrung 86 eine Ablaufbohrung (Wasserabführung) 88 senkrecht bzw. vertikal nach unten durch den Grundkörper 66 hindurch weg, um in einen Dreh- oder Führungs-oder Kontaktspalt zwischen Sperrwelle 70 und Sacklochbohrung 86 eingetretenes Wasser über die Ablaufbohrung 88 und den Ablauf 76 aus dem Grundkörper 66 abzuführen, bevor dieses über den Einführkanal 94 an der Grundkörperinnenseite in das Innere des Geräts 60 gelangt.

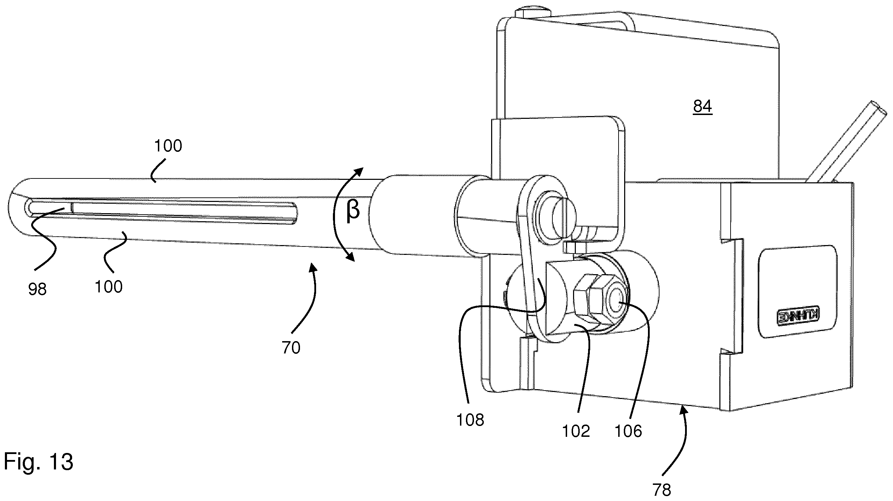

In der Fig. 13 ist eine perspektivische Ansicht der Karteneinzugsverriegelung 62 ohne den Grundkörper 66 dargestellt. Daraus ist erkennbar, dass die in der Sacklochbohrung 86 des Grundkörpers 66 geführte Sperrwelle 70 ähnlich wie in der ersten Ausführungsform einen Freigabeschlitz 98 aufweist, dessen Abmessungen (Breite und Höhe) in etwa dem im Grundkörper 66 ausgebildeten Karteneinzugsschlitz 68 entspricht. In der in der Fig. 13 dargestellten Orientierung bzw. Drehposition der Sperrwelle 70 fluchten Schlitzeingang 90, Einführkanal 94, Freigabeschlitz 98 und Schlitzausgang 92, so dass eine über den Schlitzeingang 90 eingeführte Karte zu dem hinter dem Grundkörper 66 angeordneten Transponderkartenleser 64 gelangt. Durch entsprechendes Drehen der Sperrwelle 70 um einen vorbestimmten Winkel β, z. B. 45°, um die Längsachse der Sperrwelle verschließen zu beiden Seiten des Freigabeschlitzes 98 angeordnete Zylinderaußenflächen 100 der Sperrwelle 70 den Einführkanal 94, so dass weder eine Karte noch Wasser in den Transponderkartenleser 64 eindringen kann, aber auch keine eingezogene Karte (mutwillig) aus dem Transponderkartenleser 64 wieder heraus gezogen werden kann.

Zum Drehen der Sperrwelle 70 weist die Stellmimik 80 eine im rechten Winkel zur Sperrwelle 70 angeordnete und mit einem Ende der Sperrwelle 70 drehfest verbundene Verbindungsplatte 108 auf, deren freies Ende ein Langloch aufweist, durch welches eine Schraube bzw. ein Stift 106 geführt ist, welche(r) durch einen die Verbindungsplatte 108 von beiden Seiten einschließenden Gabelkopf 102 zur Befestigung im Anker des Linearmagneten 78 geführt ist. Durch entsprechende translatorische Bewegung des Linearmagneten 78 kann die Sperrwelle 70 entsprechend um den Winkel β gedreht werden.

Die Erfindung wurde anhand von zwei bevorzugten Ausführungsformen beschrieben, ist jedoch nicht auf diese beschränkt.

Beispielsweise können in einer Bedieneinheit 4 sowohl ein karten- als auch münzenbetätigtes Gerät integriert sein und beide Geräte verriegelbar sein. Die Ansteuerung kann gemeinsam oder unabhängig, z.B. in Abhängigkeit der ausgewählten Zahlungsart angesteuert werden.

Beispielsweise können die Sperrwellen 20 bzw. 70 an ihrer Außenfläche und/oder die Sacklochbohrung 36 bzw. 86 an ihrer Innenfläche (entlang der Längsachse) eine elastische Dichtung (z.B. Elastomerdichtung) oder eine nichtelastische Dichtung (z.B. eine eng tolerierte Gleitbuchse) aufweisen, um den Spalt zwischen Sperrwellen 20 bzw. 70 und Sachlochbohrung 36 bzw. 86 zusätzlich abzudichten.

### Bezugszeichenliste

Selbstbedienungs-(SB-)Waschanlage 2
Bedieneinheit 4
Münzentgegennahmevorrichtung 6
Münzeinwurf 8
Münzausgabeschlitz 9
Schutzklappe 10
Münzeinwurfverriegelungsvorrichtung 12
Münzprüfer 14
Grundplatte 16
Fangbügel 18
Sperrwelle (Verschlusskörper) 20
Antriebseinheit 22
Annäherungssensor 24
Ablauf 26
Getriebemotor 28
Stellmimik 30
Rutschkupplung 32
Halterung 34
Sacklochbohrung 36
Ablaufbohrung (Wasserabführung) 38
Schlitzeingang 40
Schlitzausgang 42
Einführkanal 44
Aufnahme 46
Freigabeschlitze 48
Zylinderaußenflächen 50
Winkelprofil 52
Langloch 54
Führungsstift 56
Verbindungsplatte 58
Kulisse 59
Kartenentgegennahmevorrichtung 60
Karteneinzugsverriegelungsvorrichtung 62
Transponderkartenleser 64
Grundkörper 66
Karteneinzugsschlitz 68
Sperrwelle (Verschlusskörper) 70
Antriebseinheit 72
Ablauf 76
Linearmagneten 78
Stellmimik 80
Halterung 84
Sacklochbohrung 86
Ablaufbohrung (Wasserabführung) 88
Schlitzeingang 90
Schlitzausgang 92
Einführkanal 94
Freigabeschlitz 98
Zylinderaußenflächen 100
Gabelkopf 102
Stift 106
Verbindungsplatte 108
Winkel α
Winkel β

## Patentansprüche

1. Entgegennahmevorrichtung für Zahlungsmittel (6; 60) einer Fahrzeugbehandlungsanlage (2), mit:
einem Einführkanal (44; 94) für das Zahlungsmittel, insbesondere Münzen oder Wertkarten; und
einem innerhalb des Einführkanals (44; 94) angeordneten, beweglichen Verschlusskörper (20; 70), der in eine Sperrstellung bringbar ist, um den Einführkanal (44; 94) zu blockieren und sowohl für das Zahlungsmittel als auch für Spritzwasser den weiteren Weg ins Innere der Vorrichtung (6; 60) zu versperren, und in eine Freigabestellung bringbar ist, um den Einführkanal (44; 94) für das Zahlungsmittel freizugegeben;
**dadurch gekennzeichnet, dass**
der Verschlusskörper (20; 70), insbesondere um eine quer zum Einführkanal (44; 94) verlaufende Achse, rotierbar ist;
in dem Verschlusskörper (20; 70) ein Freigabeschlitz (48; 98) ausgebildet ist, der in der Freigabestellung mit dem Einführkanal (44; 94) fluchtet und in der Sperrstellung nicht; und
eine, insbesondere an der tiefsten Stelle des Einführkanals (44; 94) ausgebildete, Wasserabführung (38; 88) vorgesehen ist, über welche vor und hinter dem Verschlusskörper (20; 70) befindliches Wasser abgeführt werden kann.

2. Entgegennahmevorrichtung für Zahlungsmittel (6; 60) nach Anspruch 1, **dadurch gekennzeichnet, dass**
die Wasserabführung (38; 88) derart in dem Einführkanal (44; 94) ausgebildet ist, dass in den Einführkanal (44; 94) gelangtes und an dem Verschlusskörper (20; 70) abgewiesenes Wasser über die Wasserabführung (38; 88) abführbar ist..

3. Entgegennahmevorrichtung für Zahlungsmittel (6; 60) nach einem der vorhergehenden Ansprüche, **dadurch gekennzeichnet, dass**
der Verschlusskörper (20; 70) in einer quer zum Einführkanal verlaufenden und diesen schneidenden Aufnahme (36; 86), in einer zylindrischen Querbohrung drehbar geführt ist.

4. Entgegennahmevorrichtung für Zahlungsmittel (6; 60) nach Anspruch 3, **dadurch gekennzeichnet, dass**
der Verschlusskörper (20; 70) an seiner Außenfläche und/oder die Aufnahme (36; 86) an ihrer Innenfläche zumindest ein elastisches oder nichtelastisches Dichtelement aufweist, welches einen Kontaktspalt zwischen Verschlusskörper (20; 70) und Aufnahme (36; 86) abdichtet.

5. Entgegennahmevorrichtung für Zahlungsmittel (6; 60) nach einem der vorhergehenden Ansprüche, **dadurch gekennzeichnet, dass** der Verschlusskörper (20; 70) über ein von einem Antrieb (28; 78), insbesondere einem Getriebemotor (28) oder einem Linearmagnet (78), angetriebenes Stellglied (30; 80) zwischen der Sperrstellung und der Freigabestellung gebracht wird, wobei der Antrieb (28; 78) durch eine Steuerungsvorrichtung gesteuert wird.

6. Entgegennahmevorrichtung für Zahlungsmittel (6; 60) nach einem der vorhergehenden Ansprüche, **dadurch gekennzeichnet, dass** im Kraftfluss zwischen dem Getriebemotor (28) und dem Verschlusskörper (20) eine Rutschkupplung (32) zwischengeschaltet ist oder zwischen dem Linearmagnet (68) und dem Verschlusskörper (70) ein Bewegungswandler (80) zwischengeschaltet ist.

7. Entgegennahmevorrichtung für Zahlungsmittel (60) nach einem der vorhergehenden Ansprüche, **dadurch gekennzeichnet, dass** der Verschlusskörper (70) in die Sperrstellung gebracht wird, wenn nach dem vollständigen Einzug einer Wertkarte mittels einer Kartenauslesevorrichtung festgestellt worden ist, dass die Wertkarte zur einmaligen Verwendung bestimmt ist.

8. Entgegennahmevorrichtung für Zahlungsmittel (6; 60) nach einem der vorhergehenden Ansprüche, **dadurch gekennzeichnet, dass** der Verschlusskörper (20; 70) erst in die Freigabestellung gebracht wird, wenn im Bedienmenü der Entgegennahmevorrichtung (6; 60) eine entsprechende Zahlungsart ausgewählt worden ist.
